# EUROPÄISCHE PATENTSCHRIFT

(11) **EP 2 685 809 B1**
(45) Veröffentlichungstag und Bekanntmachung des Hinweises auf die Patenterteilung: **16.10.2019**
(21) Anmeldenummer: 12710212.7
(22) Anmeldetag: 16.03.2012
(51) Int. Cl.: A01J 5/02, A01K 1/12, A01J 5/017

(54) **MELKZEUG UND MELKSTAND MIT EINEM SOLCHEN MELKZEUG**
MILKING CLUSTER AND MILKING PARLOUR HAVING SUCH A MILKING CLUSTER
UNITÉ DE TRAITE ET SALLE DE TRAITE ÉQUIPÉE D'UNE TELLE UNITÉ DE TRAITE

(30) Priorität: 18.03.2011 DE 102011001404
(43) Veröffentlichungstag der Anmeldung: 22.01.2014
(73) Patentinhaber: GEA Farm Technologies GmbH, 59199 Bönen (DE)
(72) Erfinder: KRONE, Otto, 49479 Laggenbeck (DE); AUBURGER, Markus, 59558 Lippstadt (DE)
(74) Vertreter: Specht, Peter
(86) Internationale Anmeldenummer: PCT/EP2012/054645
(87) Internationale Veröffentlichungsnummer: WO 2012/126822

(56) Entgegenhaltungen:
- EP-A1- 0 551 960
- EP-A1- 0 811 319
- EP-B1- 0 862 360
- WO-A1-96/07314

## Beschreibung

Die Erfindung betrifft ein Melkzeug nach dem Oberbegriff der Ansprüche 1 und 8. Die Erfindung bezieht sich auch auf einen Melkstand mit einem solchen Melkzeug.

Eine derartige Anordnung wird zum maschinellen Melken von milchgebenden Tieren verwendet.

Das Dokument EP 0 647 390 B1 beschreibt Konstruktion zum automatischen Melken von Tieren und eine verschiebbare Becherabdeckung, die vor einem Ansetzvorgang des Melkbechers, der auch Zitzenbecher genannt wird, an eine Zitze eines Euters eines milchgebenden Tieres und nach dem Melkvorgang über alle Zitzenbecher geschoben wird. Alle Zitzenbecher werden gemeinsam abgedeckt. So sind bei dem Ansetzvorgang die noch nicht angesetzten Zitzenbecher offen. Dies gilt während des gesamten Melkablaufs, wenn das Tier keine vier ausgebildeten Zitzen hat (auch als "Dreistrich"-Euter bezeichnet). Werden ein oder mehrere Becher bei versiegtem Milchfluss von der Zitze abgezogen, während andere noch in einer Melkstellung sind, sind diese Melkbecher für diese Zeit ebenfalls ungeschützt. Zur Betätigung der Becherabdeckung ist ein zusätzlicher Aktor notwendig. Die Zitzenbecher stehen mit einer Zugelementanordnung in Verbindung, mittels derer sie gegen eine Halterung gezogen und dort fixiert werden.

In EP 0 862 360 B1 wird eine Schutzvorrichtung als Teilstück eines Roboterarms beschrieben, unterhalb der die Zitzenbecher beweglich angeordnet sind. Die Konstruktion ist jedoch aufwendig, denn für jeden Melkbecher sind zusätzliche Kippvorrichtungen und Aktoren notwendig.

Die EP 0 551 960 A1 beschreibt eine Vorrichtung zum automatischen Melken von Tieren. Die Vorrichtung weist einen Melkroboter mit einem Trägerglied auf, welches zum Tragen einer Anzahl von Zitzenbechern, die mit den Zitzen eines Tieres automatisch verbunden werden können, ausgebildet ist. Das Trägerglied ist mit einer Anzahl von Kontaktflächen versehen, welche sich an der Seite des Endabschnitts des Trägergliedes und um diesen herum in einer im Wesentlichen vertikalen Richtung erstrecken. Die Zitzenbecher können gegen die Kontaktflächen in einer in Draufsicht gesehenen V-Konfiguration gezogen werden. Eine Lasereinrichtung zur Bestimmung der Position der Zitzen ist hinter den in V-Form angeordneten Zitzenbechern angebracht.

Vor diesem Hintergrund besteht die Aufgabe der Erfindung darin, eine verbessertes Melkzeug sowie einen Melkstand bereitzustellen.

Diese Aufgabe wird durch eine Anordnung mit den Merkmalen des Anspruchs 1, des Anspruchs 8, durch einen Melkstand mit den Merkmalen des Anspruchs 18, und durch ein Verfahren mit den Merkmalen des Anspruchs 23 gelöst.

Die erfindungsgemäße Anordnung umfasst ein Melkzeug für einen Melkstand zum Melken von milchgebenden Tieren, aufweisend mindestens eine Zitzenbechereinheit mit einem Gehäuse, einem Zitzenbecher, einer Antriebseinrichtung, einer mit dem Zitzenbecher verbundenen Zugelementanordnung, wobei die Zugelementanordnung eine Segmenteinheit mit mindestens zwei Zugelementen aufweist.

Die mindestens eine Zitzenbechereinheit kann aus einer Parkstellung, in welcher der Zitzenbecher eine zur Senkrechten geneigte Position, z.B. eine nahezu waagerechte Position, einnimmt, in eine Ansetzstellung, in welcher der Zitzenbecher in einer nahezu senkrechten Position steht, in eine Melkstellung, in welcher der Zitzenbecher mit einer zugeordneten Zitze des zu melkenden Tieres verbunden ist, und wieder zurück bewegbar sein

Alternativ kann die mindestens eine Zitzenbechereinheit aus einer Parkstellung in eine Ansetzstellung, in welchen der Zitzenbecher in nahezu senkrechter Position steht, in eine Melkstellung, in welcher der Zitzenbecher mit einer zugeordneten Zitze des zu melkenden Tieres verbunden ist, und wieder zurück bewegbar sein.

Das Melkzeug kann z.B. von einem Roboterarm derart bewegt werden, dass die Zitzenbecher einzeln aus einer Parkstellung in eine Ansetzstellung bewegt und an die entsprechenden Zitzen des zu melkenden Tieres in einer Melkstellung angehängt und am Ende des Melkvorgangs von den Zitzen abgezogen werden, wobei sie zunächst in die Ansetzstellung und dann in die Parkstellung zurückbewegt werden.

Jeder Zitzenbecher kann separat in seine Parkstellung gebracht werden, es ist kein zusätzlicher Aktor erforderlich.

Mittels der Parkstellung der Zitzenbecher wird ein Verschmutzen derselben wirkungsvoll verhindert.

Abgeschlagene oder abgetretene oder auch abgefallene Zitzenbecher können sofort in die Parkstellung zurückbewegt werden und somit nicht auf den Boden fallen und verschmutzen.

Die Gefahr, dass sich Zugelemente verheddern, wird erheblich minimiert, da sich diese innerhalb einer Segmenteinheit befinden.

Ein einfacher Aufbau ohne Umlenkungen und Rollen ermöglicht einen einfachen Service und damit Kosteneinsparungen.

In einer besonders bevorzugten Ausführung kann die Segmenteinheit eine Fixiereinrichtung, ein Kippsegment, mehrere Zwischensegmente und ein Fixiersegment aufweisen, wobei die Fixiereinrichtung mit dem Zitzenbecher fest verbunden ist und das Fixiersegment mit dem Gehäuse fest verbunden ist. Durch einzelne Segmente wird eine Flexibilität und Beweglichkeit des Zitzenbechers erreicht, wenn die Zugelementanordnung gelöst bzw. entspannt ist. Es ist nur eine geringe freizugebende Länge der Zugelemente nötig, z.B. 60mm im Vergleich zu 220mm nach dem Stand der Technik.

Die Fixiereinrichtung kann einen schrägen Kippabschnitt aufweisen, und das Kippsegment kann einen mit dem schrägen Kippabschnitt korrespondierenden schrägen Anlageabschnitt aufweisen. Damit ist eine vorher festlegbare Verschwenkung und Position der Parkstellung möglich.

Die mindestens zwei Zugelemente der Zugelementanordnung sind übereinander angeordnet. So ist eine schmale und stabile Segmenteinheit erzielt, wenn sie fixiert ist.

In einer Ausführung können die mindestens zwei Zugelemente der Zugelementanordnung mit einem Kipphebel verbunden sein, welcher mit der Antriebseinrichtung und einem Kippantrieb in Wirkverbindung steht. Über zwei Zugelemente ist somit nicht nur eine Fixierung sondern auch eine Verschwenkung in die Parkstellung des Zitzenbechers möglich.

Der Kipphebel kann durch die Antriebseinrichtung in eine erste Position bewegbar sein, in welcher die mindestens zwei Zugelemente gespannt sind, wobei die Segmenteinheit zusammengezogen in Eingriff steht und der mindestens eine Zitzenbecher in der Ansetzstellung steht, und der Kipphebel kann durch die Antriebseinrichtung in eine zweite Position bewegbar sein, in welcher die mindestens zwei Zugelemente entspannt sind, wobei der mindestens eine Zitzenbecher die Melkstellung einnimmt.

Dazu kann der Kipphebel in seiner ersten Position durch den Kippantrieb um eine Kippachse in eine Schwenkposition verschwenkbar sein, in welcher ein Zugelement der mindestens zwei Zugelemente verkürzt und das andere verlängert wird, wobei der schräge Kippabschnitt der Fixiereinrichtung und der schräge Anlageabschnitt des Kippsegments in Eingriff sind und der mindestens eine Zitzenbecher in die Parkstellung verschwenkt ist.

In einer alternativen bevorzugten Ausführung kann die Segmenteinheit eine Fixiereinrichtung, ein Deckelsegment, mehrere Zwischensegmente und ein Fixiersegment aufweisen, wobei die Fixiereinrichtung mit dem Zitzenbecher fest verbunden ist und das Fixiersegment mit dem Gehäuse fest verbunden ist. Dadurch kann jeder Zitzenbecher separat abgedeckt werden. Es sind keine zusätzlichen Antriebe erforderlich.

Das Deckelsegment kann mit einem Deckel fest verbunden sein. So ist eine einfache Integration des Deckels in die Segmenteinheit möglich.

Die Abdeckung erfolgt, indem ein Kopf mit einer Zitzenöffnung des mindestens einen Zitzenbechers in der Parkstellung von einer Deckelkappe des Deckels des Deckelsegmentes bedeckt ist. Der Deckel schwenkt automatisch über den Zitzenbecher, wenn dieser die Parkstellung einnimmt und gibt sie automatisch frei, wenn die Parkstellung verlassen wird. Dazu kann das Deckelsegment mit dem Zitzenbecher über mindestens einen Mitnehmer mit einer axialen Beweglichkeit verbunden sein. Die axiale Beweglichkeit macht es möglich, dass der Zitzenbecher und das Deckelsegment unterschiedliche Stellungen zueinander in der Parkstellung erreichen, wodurch der Deckel über den Zitzenbecher schwenken und ihn abdecken kann.

Unterhalb des Fixiersegmentes kann am Gehäuse ein Tragstück angeordnet sein, auf welchem mindestens eins der Zwischensegmente aufliegt. Damit wird erreicht, dass der Zitzenbecher in der Parkstellung nicht am Boden liegt, d.h. nicht zu tief hängt und den Boden berühren kann, wodurch weitere Verschmutzungen und auch Einsaugen von Schmutz verhindert werden.

Die mindestens zwei Zugelemente der Zugelementanordnung sind in dieser alternativen Ausführung nebeneinander angeordnet. Damit ergibt sich eine stabile Lage in einer fixierten Stellung.

Die mindestens zwei Zugelemente der Zugelementanordnung stehen mit einer Antriebseinrichtung in Wirkverbindung, wobei Zylinder mit kleinem Hub und Durchmesser verwendbar sind.

Es ergibt sich ein kompakter Aufbau des gesamten Melkzeugs, wodurch eine große Beweglichkeit und zusätzlicher Bauraum auf dem Melkzeug für Zusatzeinrichtungen, wie z.B. Positionier- und Erkennungssysteme (Kamera) geschaffen ist.

Es ist vorgesehen, dass die mindestens zwei Zugelemente durch die Antriebseinrichtung in eine erste Position bewegbar sind, in welcher sie gespannt sind, wobei die Segmenteinheit zusammengezogen in Eingriff steht und der mindestens eine Zitzenbecher in der Ansetzstellung steht, und dass die mindestens zwei Zugelemente durch die Antriebseinrichtung in eine zweite Position bewegbar sind, in welcher sie entspannt sind, wobei der mindestens eine Zitzenbecher durch seine Schwerkraft in die Parkstellung bewegt ist oder die Melkstellung einnimmt.

In einer weiteren alternativen Ausführung kann die Segmenteinheit eine Fixiereinrichtung, mehrere Zwischensegmente und ein Fixiersegment aufweisen, wobei die Fixiereinrichtung mit dem Zitzenbecher fest verbunden ist und das Fixiersegment mit dem Gehäuse fest verbunden ist.

Ein Melkstand zum Melken von milchgebenden Tieren kann mit dem oben beschriebenen Melkzeug versehen sein.

Dabei kann das Melkzeug an einer Tragarmeinrichtung oder einem Roboterarm angebracht sein.

In weiteren Ausführungen ist das an der Tragarmeinrichtung oder dem Roboterarm flexibel angebracht. Dies kann z.B. durch ein Anbindungselement erfolgen, das elastische und flexible Eigenschaften aufweist. Diese Eigenschaften können materialintern vorhanden sein oder durch eine federnde Konstruktion des Anbindungselementes gebildet sein. Damit wird eine elastische Nachgiebigkeit zwischen Melkzeug und Tragarmeinrichtung oder Roboterarm ermöglicht. Dies vermindert sowohl Beschädigungen des Melkzeugs und der Tragarmeinrichtung oder des Roboterarms als auch eine Verletzungsgefahr der zu melkenden Tiere, z.B. bei Tritten dieser Tiere. Hierbei ist zu berücksichtigen, dass z.B. eine durchschnittliche deutsche Milchkuh ein Gewicht von ca. 650 kg aufweist.

Ein Verfahren gemäß Anspruch 23 zum Ansetzen eines oben beschriebenen Melkzeugs ist dadurch gekennzeichnet, dass bei einem Ansetzvorgang der Zitzenbecher an die Zitzen eines Euters eines zu melkende Tieres beim Start eines senkrechten Hochfahrens des Melkzeugs in Richtung Euter die Zitzenbecher, welche nicht angesetzt werden, aus ihrer Ansetzstellung gelöst und in die Parkstellung gebracht werden.

Außerdem ist es möglich, dass bei schon in Melkstellung befindlichen Zitzenbechern eine seitliche Beweglichkeit möglich ist, ohne störende Zugkräfte auf diese in Melkstellung befindlichen Zitzenbecher auszuüben.

Durch die separate Beweglichkeit der Zitzenbechereinheiten kann das Melkzeug auch für milchgebende Tiere mit Eutern mit vier oder auch drei Zitzen verwendet werden.

Es wird eine hohe Robustheit erreicht, denn bei Tritten auf die Zitzenbecher geben die Segmente nach und fixieren sich dann automatisch wieder.

Vorteilhafte Weiterbildungen und Ausgestaltungen des Melkzeugs bzw. des Melkstands sind Gegenstand der jeweiligen abhängigen Ansprüche.

Weitere Vorteile und Einzelheiten gehen aus den in den Figuren der Zeichnung dargestellten Ausführungsbeispielen hervor. Hierbei zeigen:
- Figur 1: eine perspektivische Darstellung eines erfindungsgemäßen Melkstands;
- Figur 2: eine Seitenansicht eines ersten Ausführungsbeispiels eines erfindungsgemäßen Melkzeugs mit Zitzenbechereinheiten in Ansetz- und Parkstellung;
- Figur 3: eine Draufsicht auf das Melkzeug nach Figur 2;
- Figur 4: eine Seitenansicht einer Zitzenbechereinheit des Melkzeugs nach Figur 2 in Parkstellung;
- Figur 5: eine Seitenansicht der Zitzenbechereinheit nach Figur 4 in Melkstellung;
- Figur 6: eine Seitenansicht der Zitzenbechereinheit nach Figur 4 in Ansetzstellung;
- Figur 7: eine schematische Perspektivansicht eines zweiten Ausführungsbeispiels des Melkzeugs;
- Figur 8, 8a und 8b: schematische Ansichten des zweiten Ausführungsbeispiels nach Figur 7;
- Figur 9: eine schematische Längsschnittansicht längs Linie IX aus Figur 8b;
- Figur 9a: eine weitere schematische Längsschnittansicht längs Linie IX aus Figur 8b mit einer Variation des zweiten Ausführungsbeispiels nach Figur 7;
- Figur 10: eine vergrößerte Schnittansicht des Bereichs X aus Figur 9;
- Figur 11: eine schematische Längsschnittansicht längs Linie XI aus Figur 8b;
- Figur 12: eine vergrößerte Schnittansicht des Bereichs XII aus Figur 11;
- Figur 13: eine schematische Perspektivansicht eines Deckelsegments des zweiten Ausführungsbeispiels nach Figur 7;
- Figur 14: eine schematische Perspektivansicht des zweiten Ausführungsbeispiels nach Figur 7 in dem Melkstand nach Figur 1; und
- Figur 15: eine schematische Perspektivansicht eines dritten Ausführungsbeispiels des Melkzeugs.

In den Figuren sind gleiche bzw. ähnliche Funktionselemente mit gleichen Bezugszeichen versehen.

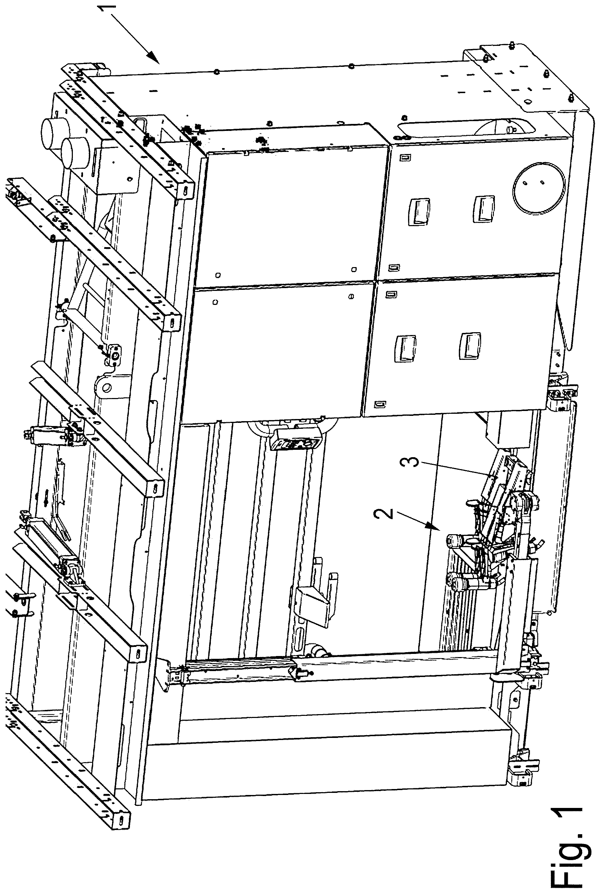

Figur 1 zeigt eine perspektivische Darstellung eines Melkstands 1 mit einem Melkzeug 2 und einem Träger 3. Das Melkzeug 2 ist hier an dem Träger einer nicht näher bezeichneten Tragarmeinrichtung angebracht, welche selbsttätig oder durch einen Roboter (nicht gezeigt) zur Einnahme verschiedener Postionen zum Melken und zur Einstellung verschiedener Stellungen von Zitzenbechereinheiten des Melkzeugs 2 betätigbar ist. Mehrere solcher Melkstände 1 können in Reihe angeordnet sein und durch einen einzigen Roboter bedient werden.

Das Melkzeug 2 kann auch an einem Roboterarm montiert sein.

Die Tragarmeinrichtung hat die Funktion, das Melkzeug 2 gewichtsneutral zu tragen und so leichtgängig zu sein, dass der Träger 3 den Bewegungen des zu melkenden Tiers folgt.

Wird das Melkzeug 2 an einer solchen Tragarmeinrichtung befestigt, wird zum automatischen Ansetzen von Zitzenbechern 4, die im Weiteren noch näher erläutert werden, ein Roboterarm an die Tragarmeinrichtung angedockt. Der Roboterarm bewegt die Tragarmeinrichtung bzw. den Träger 3 zusammen mit dem Melkzeug 2 zu den Zitzen des zu melkenden Tieres und setzt die Zitzenbecher 4 nacheinander an die zugeordneten Zitzen an. Dazu werden die Zitzenbecher 4 aus einer Parkstellung, in welcher sie im Wesentlichen waagerecht oder in einer zur Senkrechten geneigten Position stehen, zunächst in eine Ansetzstellung, in der sie im Wesentlichen senkrecht stehen, gebracht. Die Zitzenbecher 4 können natürlich auch in einer zur Senkrechten geneigten Position in der Parkstellung stehen.

Sobald alle Zitzen in einer so genannten Melkstellung angesetzt sind, löst sich der Roboterarm vom Träger 3 und fährt gegebenenfalls zu einem nächsten Melkstandplatz, um dort die Zitzenbecher 4 anzusetzen. Die Zitzenbecher 4 hängen während der Melkphase mit dem Melkzeug 2 am Träger 3, der den Bewegungen des Tieres folgt. Sobald der Milchfluss einer Zitze versiegt ist, wird der entsprechende Zitzenbecher 4 von der Zitze in die Ansetzstellung abgezogen und zum Schutz vor Schmutzeintrag in die Parkstellung gebracht. Die drei verschiedenen Stellungen werden unten noch näher erläutert. Sobald alle Zitzenbecher abgezogen und in der Parkstellung sind, schwenkt der Träger 3 mit dem Melkzeug 2 von der Position unter dem Tier in die Position neben dem Tier, sodass das Tier den Melkplatz verlassen kann.

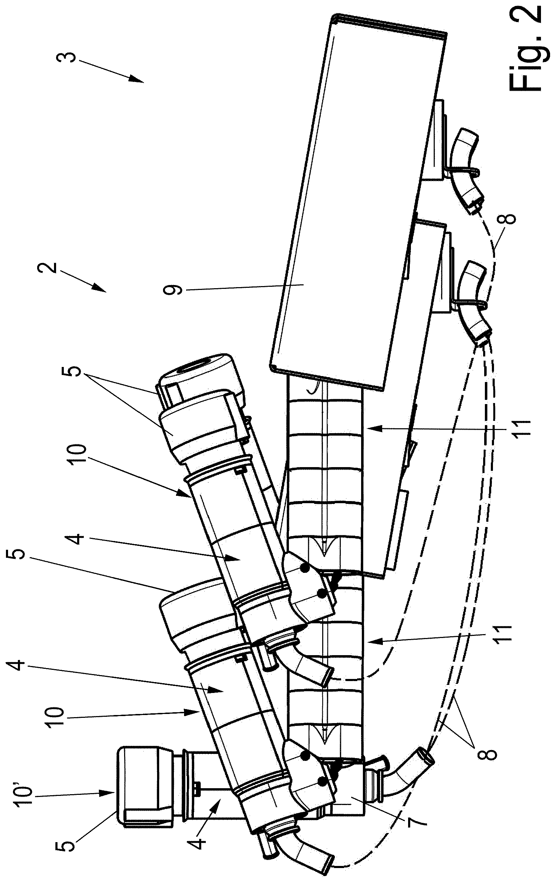

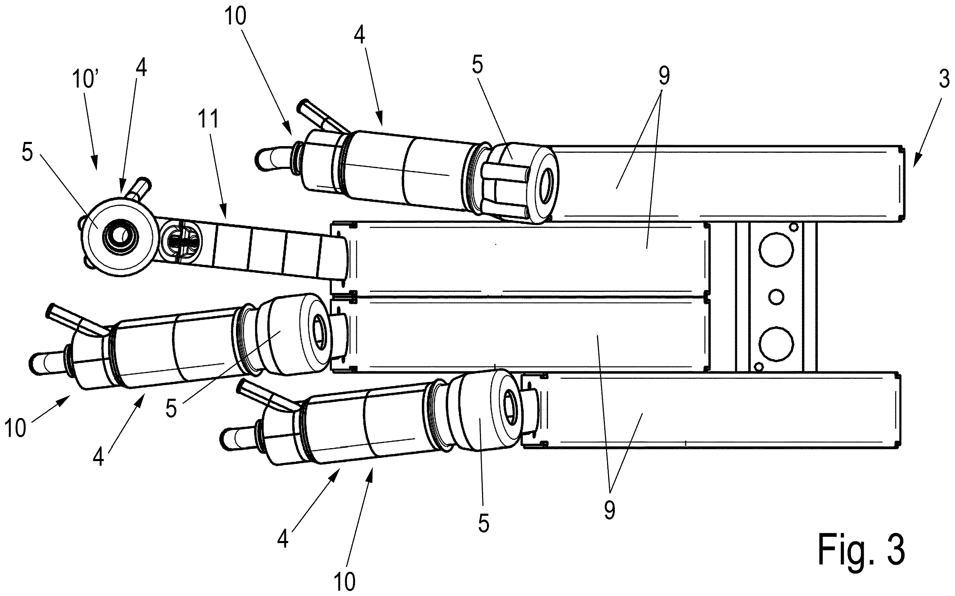

Figur 2 stellt eine Seitenansicht eines ersten Ausführungsbeispiels eines erfindungsgemäßen Melkzeugs 1 mit Zitzenbechereinheiten 10, 10' in Ansetz- und Parkstellung dar. Figur 3 zeigt eine Draufsicht auf das Melkzeug 2 nach Figur 2.

Dabei sind eine vordere Zitzenbechereinheit 10' in Ansetzstellung und drei hintere Zitzenbechereinheiten 10 in Parkstellung gezeigt. Üblicherweise steht nur eine Zitzenbechereinheit 10' in der Ansetzstellung, die Figuren 2 und 3 sollen nur den Unterschied hervorheben.

Das Melkzeug 2 weist in diesem Ausführungsbeispiel vier Zitzenbechereinheiten 10, 10' auf, welche in ihren Längsrichtungen nebeneinander angeordnet sind und jeweils ein Gehäuse 9 aufweisen. Jede der vier Zitzenbechereinheiten 10, 10' kann unabhängig von den anderen eine der drei unterschiedlichen Stellungen (Parkstellung, Ansetzstellung und Melkstellung) einnehmen.

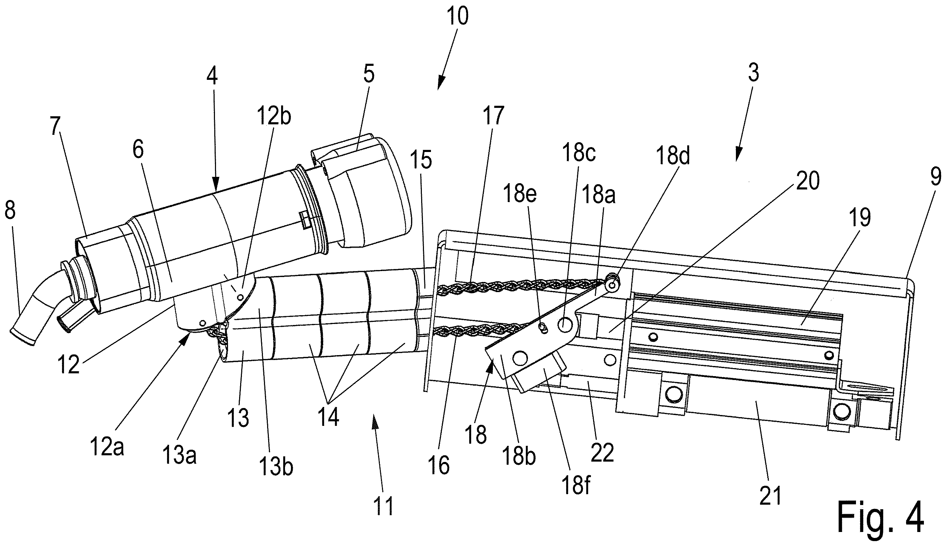

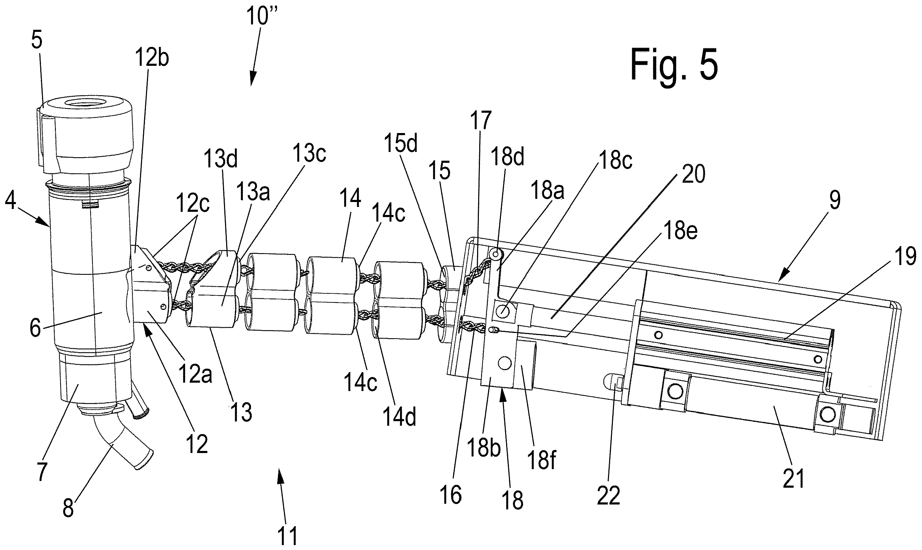

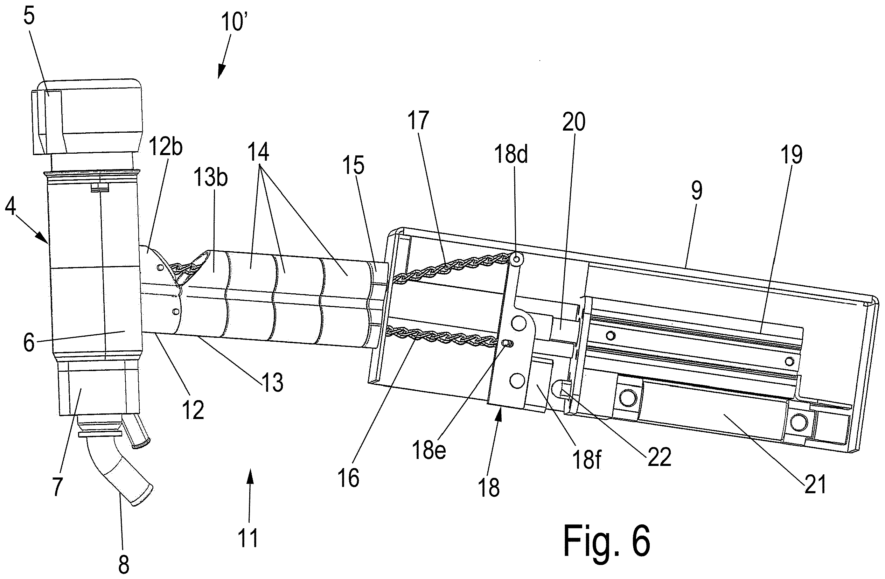

In Figur 2 und 3 sind drei der vier Zitzenbechereinheiten 10, 10' der besseren Übersicht wegen in der Parkstellung (siehe Figur 4) und eine in der senkrechten Ansetzstellung (siehe Figur 6) dargestellt. In der Parkstellung ist die jeweilige Zitzenbechereinheit 10 unbenutzt und aus der aufrechten Lage in die Waagerechte oder in eine zur Senkrechten geneigte Position verschwenkt. Die dritte Stellung ist die Melkstellung, die in Figur 5 gezeigt ist. Zur besseren Unterscheidung ist die Zitzenbechereinheit 10 in Parkstellung mit dem Bezugszeichen 10, in der Ansetzstellung mit dem Bezugszeichen 10' und in der Melkstellung mit dem Bezugszeichen 10" versehen. Jede Zitzenbechereinheit 10 weist einen Zitzenbecher 4 mit einem Zitzengummi, der einen Kopf 5 und einen Schaft hat, einem Anbindungsabschnitt 6 und einem Anschlussabschnitt 7 auf. Der Kopf 5 besitzt eine Zitzenöffnung (siehe Figur 3) zum Einführen einer Zitze (nicht gezeigt). In einem Abstand zum Kopf 5 ist an dem unteren Ende des Schafts der Anbindungsabschnitt 6 und der Anschlussabschnitt 7, welcher mit einer Schlaucheinheit 8 zur Vakuumaufbringung und Milchabsaugung verbunden ist, angeordnet.

Der Anbindungsabschnitt 6 steht mit einer Zugelementanordnung in Verbindung. Die Zugelementanordnung umfasst eine Segmenteinheit 11, welche in ihrem Inneren zwei übereinander angeordnete Zugelemente 16, 17 aufweist, die im Zusammenhang mit Figur 4 näher beschrieben werden.

Der Träger 3 ist mit einem Befestigungsarm 3a zur Befestigung an einer nicht gezeigten Tragarmeinrichtung oder Roboterarmeinrichtung vorgesehen.

In Figur 4 ist eine Seitenansicht der Zitzenbechereinheit 10 des Melkzeugs nach Figur 2 in Parkstellung gezeigt. Figur 5 zeigt eine Seitenansicht der Zitzenbechereinheit 10 nach Figur 4 in Melkstellung, und Figur 6 illustriert eine Seitenansicht der Zitzenbechereinheit 10 nach Figur 4 in Ansetzstellung. Das Gehäuse 9 ist seitlich offen dargestellt.

Der Anbindungsabschnitt 6 des Zitzenbechers 4 weist eine Fixiereinrichtung 12, welche zur Zusammenwirkung mit einem korrespondierenden Kippsegment 13 der Segmenteinheit 11 vorgesehen ist. Die Fixiereinrichtung 12 weist einen Fixierabschnitt 12a auf, welcher im Inneren der Fixiereinrichtung 12 sowohl unten als auch oben in einem Kippabschnitt 12b an deren Innenrändern umlaufend angeordnet ist.

Der Kippabschnitt 12b ist angeschrägt ausgebildet, wobei ein Schrägungswinkel in etwa 45° beträgt und die gekippte bzw. geschwenkte Parkstellung des Zitzenbechers 4 in Zusammenwirkung mit einem korrespondierenden oberen Anlageabschnitt 13b des Kippsegmentes 13 beeinflusst.

Die Segmenteinheit 11 weist mehrere Zwischensegmente 14 auf, die zwischen dem Kippsegment 13 und einem an dem Gehäuse 9 angebrachten Fixiersegment 15 angeordnet sind. Alle Segmente 13 und 14 weisen einen umlaufenden Fixierabschnitt 13c und 14c auf (siehe Figur 5). Die jeweiligen Fixierabschnitte 12c, 13c und 14c wirken zusammen mit korrespondierenden Aufnahmeabschnitt 13d, 14d, 15d der jeweiligen zusammengezogenen Segmente 12, 13, 14, 15 der Segmenteinheit 11 (Figur 4 und 5).

Die Segmenteinheit 11 ist in der Parkstellung in Figur 4 in einer zusammengezogenen Stellung gezeigt. Dabei liegen alle Zwischensegmente 14 wie oben kurz beschrieben formschlüssig an-/ineinander und in/an dem Fixiersegment 15 an. Das Kippsegment 13 steht in der Parkstellung mit seinem oberen Anlageabschnitt 13b mit dem oberen Kippabschnitt 12b der Fixiereinrichtung 12 in Kontakt.

Der zusammengezogene Zustand der Segmenteinheit 11 wird durch ein Spannen der übereinanderliegenden Zugelemente 16, 17, die z.B. Ketten sind, bewirkt. Ein jeweiliges Ende der Zugelemente 16, 17 ist in der Fixiereinrichtung 12 des Zitzenbechers 4 angelenkt und ein jeweiliges anderes Ende der Zugelemente 16, 17 ist durch die das Fixierelement 15 in das Gehäuse 9 geführt und mit einem Kipphebel 18 im Gehäuse 9 verbunden.

In dem Gehäuse 9 ist außerdem eine Antriebseinrichtung 19 angeordnet, welche mit einer Antriebsstange 20 mit dem Kipphebel 18 verbunden ist. Weiterhin ist unterhalb der Antriebseinrichtung 19 ein Kippantrieb 21 mit einer Kippstange 22 angebracht.

Der Kipphebel 18 umfasst einen Kippabschnitt 18a und einen Zugabschnitt 18b. Zwischen diesen Abschnitten 18a und 18b ist der Kipphebel 18 in einer Kippachse 18c um diese schwenkbar mit einem Ende der Antriebsstange 20 der Antriebseinrichtung 19 verbunden. Die Antriebseinrichtung 19 ist z.B. ein pneumatischer Zylinder, ebenso wie der Kippantrieb.

Unterhalb der Kippachse 18c ist das Ende des ersten Zugelementes 16 am oberen Bereich des Zugabschnitts 18b des Kipphebels 18 in einer Anlenkung 18e angelenkt, und das Ende des zweiten Zugelementes 17 ist am oberen Ende des Kippabschnitts 18a in einer Anlenkung 18d angelenkt.

Der Zugabschnitt 18b des Kipphebels 18 ist zur Seite des Kippantriebs 21 mit einem Druckabschnitt 18f versehen, welcher zur Zusammenwirkung mit dem Ende der Kippstange 22 des Kippantriebs 21 vorgesehen ist.

Zum Zusammenziehen der Segmenteinheit 11 wird die Antriebsstange 20 der Antriebseinrichtung 19 in diese eingezogen, wobei der Kipphebel 18 die an ihm angelenkten Zugelemente 16 und 17 in Richtung auf das Gehäuse 9 zieht und sich die Fixiereinrichtung 12 und die Segmente 13, 14 und 15 ineinander zusammen gezogen werden. Dabei wird der Zitzenbecher 4 zunächst in eine senkrechte Stellung gebracht, welche die Ansetzstellung bildet, was in Figur 6 gezeigt ist. Hierbei sind die unteren Abschnitte der Fixiereinrichtung 12 und des Kippsegmentes 13 in Eingriff und Kontakt.

Zur Einnahme der Parkstellung wird der Kipphebel 18 durch den Kippantrieb 21 um die Kippachse 18c verschwenkt, indem der Kippantrieb 21 die Kippstange 22 in Richtung auf den Kipphebel 18 heraus bewegt und die Kippstange 22 in Kontakt mit dem Druckabschnitt 18f den Kipphebel 18 verschwenkt. Dies bewirkt, dass das zweite, obere Zugelement 17 durch den im Uhrzeigersinn verschwenkten Kippabschnitt 18a weiter in Richtung auf das Gehäuse 9 gezogen wird und den Zitzenbecher 4 entsprechend aus der nahezu senkrechte Ansetzstellung in die Parkstellung verschwenkt, welche nahezu waagerecht gezeigt ist, aber auch eine zur Senkrechten geneigte Position sein kann. Das untere, erste Zugelement 16 wird dabei etwas verlängert, um eine Verschwenkung des Zitzenbechers 4 zu ermöglichen. Die Länge zwischen der Anlenkung 18e und der Kippachse 18c ist dabei deutlich geringer als die der Länge zwischen Kippachse 18c und der Anlenkung 18d des oberen Zugelementes 17. Das zugehörige Verhältnis beträgt etwa 1:3.

Ist der Zitzenbecher 4 in der Ansetzstellung nach Figur 6 mit einer zugeordneten Zitze des Euters des zu melkenden Tieres verbunden, so wird die Melkstellung nach Figur 5 eingenommen, indem der Antriebskolben 20 der Antriebseinrichtung 21 in Richtung auf den Zitzenbecher 4 ausgefahren wird. Dabei werden die Zugelemente 16, 17 verlängert und gelockert, sodass die Fixiereinrichtung 12 und die Segmente 13, 14 und 15 außer Kontakt kommen und lose auf den Zugelementen 16, 17 liegen. Daraus ergibt sich eine freie Beweglichkeit des Zitzenbechers 4.

Die Zitzenbecher 4 hängen in der Melkstellung jeweils an einer Zitze des Euters des zu melkenden Tieres. Dabei ermöglichen die so gelockerten bzw. gelösten Zugelemente 16, 17 in der Melkstellung auch eine seitliche Bewegungsfreiheit zum Anfahren und Ansetzen der anderen Zitzenbecher 4.

Ist der Milchfluss einer Zitze versiegt, und der Zitzenbecher 4 soll von dieser Zitze aus der Melkstellung abgezogen werden, bewegt die Antriebseinrichtung 19 den Kipphebel 18 in Richtung vom Zitzenbecher 4 weg, wodurch die Zugelemente 16, 17 zwischen Zitzenbecher 4 und Fixiersegment 15 verkürzt werden. Dadurch wird der Zitzenbecher 4 nach unten gezogen und durch die Zwischensegmente 14, Fixiereinrichtung 12 und Fixiersegment 15 wieder in die feste, senkrechte Ansetzstellung gebracht. Dies erfolgt auch dann, wenn der Zitzenbecher 4 vom Tier abgeschlagen oder abgetreten wurde, oder abgefallen ist.

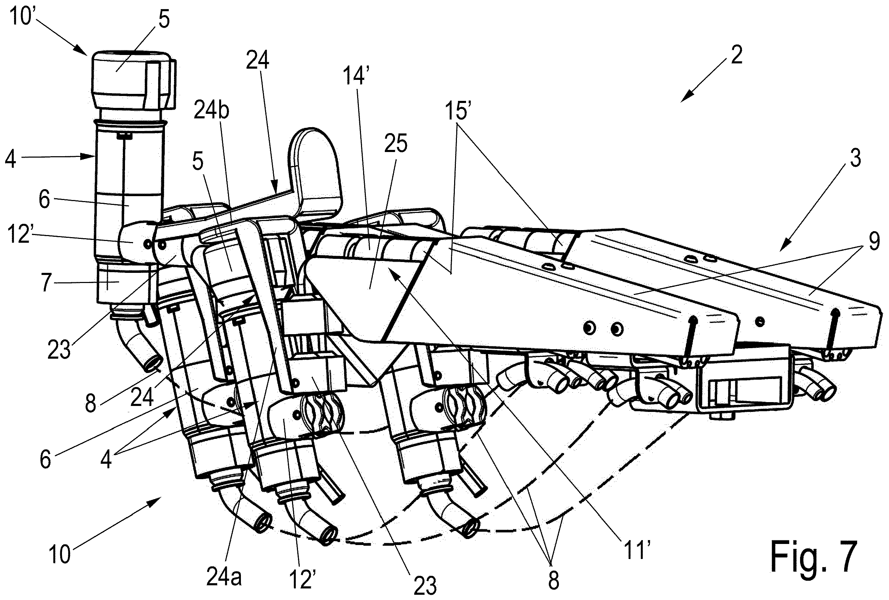

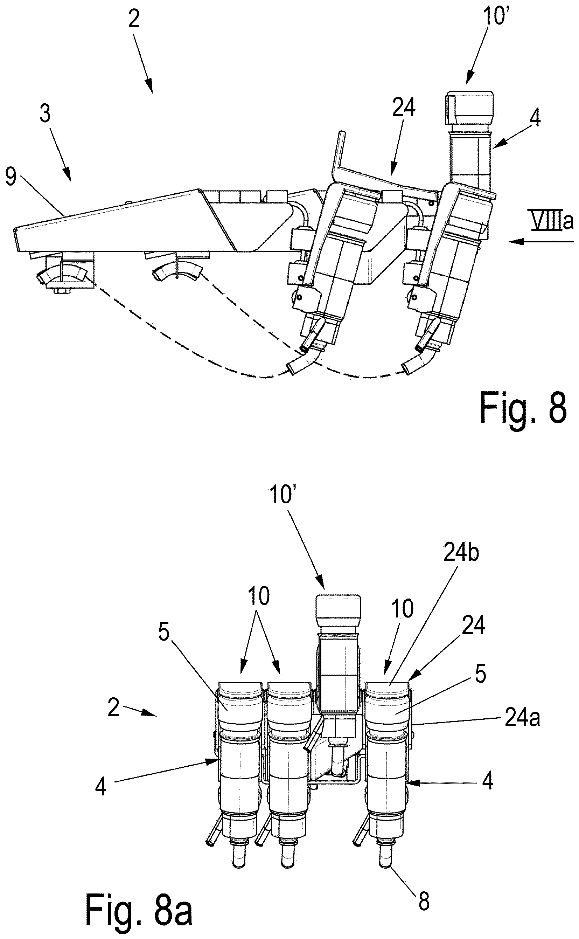

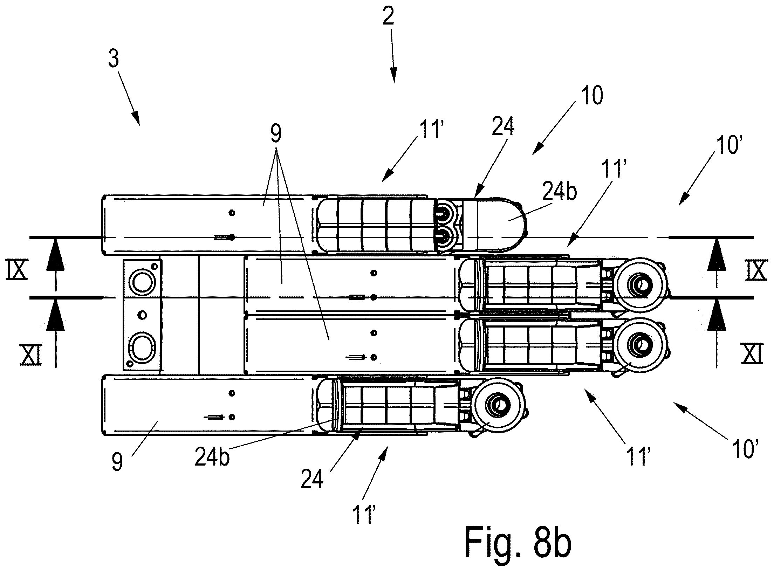

Figur 7 zeigt eine schematische Perspektivansicht eines zweiten Ausführungsbeispiels des Melkzeugs 2. Drei Zitzenbechereinheiten 10 sind in Parkstellung und eine Zitzenbechereinheit 10' in Ansetzstellung gezeigt, dies ist aus Gründen der Übersichtlichkeit in der Zeichnung erfolgt. Figuren 8, 8a und 8b stellen schematische Ansichten des zweiten Ausführungsbeispiels nach Figur 7 dar, wobei Figur 8 eine Seitenansicht, Figur 8a eine Vorderansicht und Figur 8b eine Draufsicht des Melkzeugs 2 zeigen.

Das zweite Ausführungsbeispiel unterscheidet sich von dem ersten Ausführungsbeispiel im Aufbau der Segmenteinheit 11' der Zugelementanordnung.

Die Segmenteinheit 11' besitzt anstelle des Kippsegments 13 des ersten Ausführungsbeispiels (Figuren 4 bis 6) ein Deckelsegment 23, das zwischen dem ersten Zwischensegment 14' und der Fixiereinrichtung 12' des Zitzenbechers 4 angeordnet ist. Die Fixiereinrichtung 12' besitzt hier keine Schräge.

Die Segmenteinheit 11' weist nebeneinander angeordnete Zugelemente 16' auf, welche innerhalb der Fixiereinrichtung 12' und der Segmente 14', 15' geführt sind.

Das jeweilige Gehäuse 9 einer jeden Zitzenbechereinheit 10, 10' ist in Richtung auf den Zitzenbecher 4 mit einem Tragstück 25 versehen, welche unterhalb der Segmenteinheit 11' angeordnet ist. Die Länge des Tragstücks 25 ist z.B. so bemessen, dass ein Großteil der Zwischensegmente 14', im dargestellten Beispiel alle Zwischensegmente 14', auf ihr aufliegt. Weiterhin besitzt das Tragstück 25 hier auch seitliche Führungen.

Das Deckelsegment 23 ist mit einem Deckel 24 verbunden. Der Deckel 24 weist Deckelarme 24a auf, welche mit dem Deckelsegment 23 und mit einer Deckelkappe 24b verbunden sind. Das Deckelsegment 23 wird unten noch näher beschrieben.

In der Ansetzstellung der Zitzenbechereinheit 10' ist das Deckelsegment 23 zwischen den Zwischensegmenten 14' und der Fixiereinrichtung 12' fixiert, wobei der Deckel 24 über der Segmenteinheit 11' angeordnet ist und der Kopf 5 des Zitzenbechers 4 unbedeckt ist.

In der Parkstellung der Zitzenbechereinheit 10 ist das Deckelsegment 23 bei gelockerten Zugelementen 16' nicht mehr fixiert, sondern liegt auf der Oberseite der Fixiereinrichtung 12' derart auf, dass die Deckelkappe 24b des Deckels 24 den Kopf 5 an dessen Oberseite und dessen Zitzenöffnung verschließt. Dabei verlaufen die Deckelarme 24a in etwa parallel zu einer Längsachse des Zitzenbechers 4.

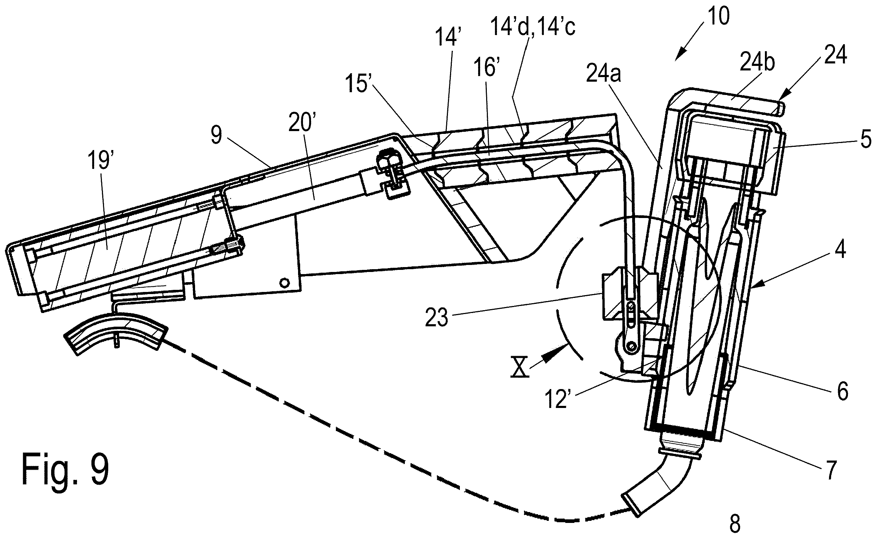

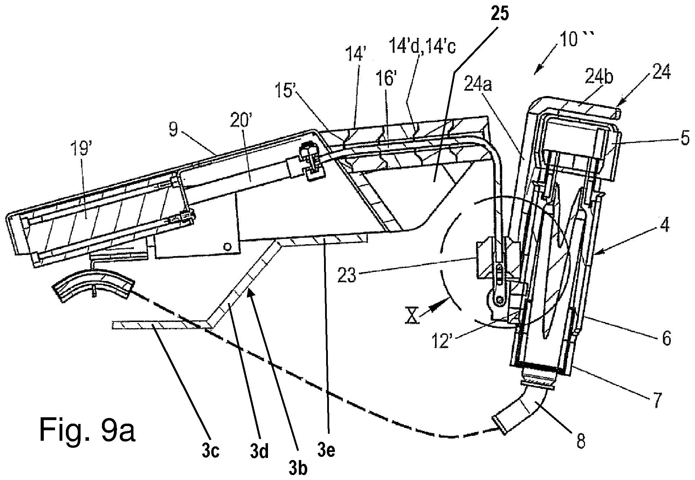

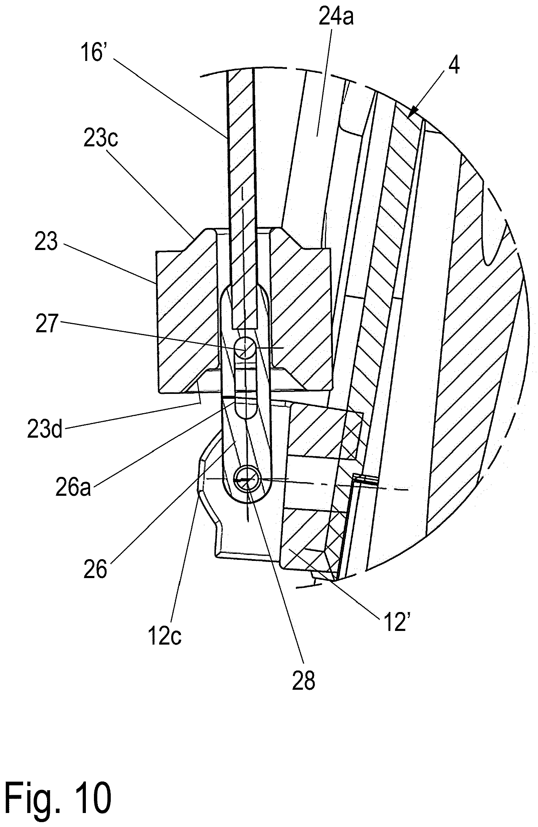

Die Parkstellung wird im Zusammenhang mit Figur 9 und 10 weiter beschrieben. Figur 9 zeigt eine schematische Längsschnittansicht längs Linie IX aus Figur 8b, und Figur 10 illustriert eine vergrößerte Schnittansicht des Bereichs X aus Figur 9.

In Figur 9 ist die Zitzenbechereinheit 10 in Parkstellung gezeigt. Innerhalb des Gehäuses 9 ist eine Antriebseinrichtung 19' mit einer Antriebsstange 20' angeordnet. Die Antriebsstange 20' ist mit den nebeneinanderliegenden Zugelementen 16', von denen hier nur eins gezeigt ist, verbunden. Die Zugelemente 16' verlaufen innerhalb der Segmente 15', 14' und 23. Das andere jeweilige Ende eines Zugelementes 16' ist an einem Mitnehmer 26 befestigt. In der gezeigten Parkstellung sind die Zugelemente 16' gelöst. Die Zwischensegmente 14' werden durch das Tragstück 25 gestützt und gehalten, wobei sich der Zitzenbecher 4 durch Schwerkraft nach unten bewegen. Dabei wird das Deckelsegment 23 in die gezeigte und oben schon erwähnte Stellung mitgenommen. Die Deckelkappe 24b des Deckels 24 deckt die Zitzenöffnung am Kopf 5 des Zitzenbechers 4 ab.

Jeder Mitnehmer 26 am jeweiligen Ende der Zugelemente 16' ist mit seinem anderen Ende, das nicht mit dem jeweiligen Zugelement 16' verbunden ist, über einen Schwenkbolzen 28 verschwenkbar an der Fixiereinrichtung 12' des Zitzenbechers 4 angelenkt. Das Deckelsegment 23 kann sich axial zu den Mitnehmern 26, die in seinem Inneren angeordnet sind, bewegen. Diese Bewegung ist jedoch begrenzt, da das Deckelsegment 23 mit einem Anschlagbolzen 27, der sich durch Langlöcher 26a der Mitnehmer 26 erstreckt, fest verbunden ist.

Figur 9a zeigt eine weitere schematische Längsschnittansicht längs Linie IX aus Figur 8b mit einer Variation des zweiten Ausführungsbeispiels nach Figur 7. Im Unterschied zu der Ansicht nach Figur 9 ist ein Anbindungselement 3b für eine flexible Anbindung des Melkzeugs 2 an einer Tragarmeinrichtung oder einem Roboterarm vorgesehen. Das Anbindungselement 3b weist einen ersten Befestigungsabschnitt 3c zur Befestigung an der Tragarmeinrichtung oder dem Roboterarm auf. Der erste Befestigungsabschnitt 3c ist über einen abgewinkelten Stegabschnitt 3d mit einem zweiten Befestigungsabschnitt 3e verbunden, durch welchen das Anbindungselement 3b an dem Melkzeug 2, z.B. an dessen Gehäuse 9 befestigt ist. Die Befestigung der Befestigungsabschnitte 3c und 3e kann z.B. mittels Schrauben oder Nieten erfolgen. Auch ein Anschweißen oder eine einstückige Ausführung des Anbindungselementes 3b mit dem Gehäuse 9 kann denkbar sein.

Das Anbindungselement 3b ermöglicht eine flexible Anbringung des Melkzeugs an der Tragarmeinrichtung oder dem Roboterarm. Dazu kann es z.B. aus einem Federmaterial hergestellt sein. Es ist auch möglich, dass es eine Kombination aus festen Befestigungsabschnitten 3c und 3e mit einem elastischen, flexiblen Stegabschnitt 3d ist. Andere flexible Ausführungen sind leicht vorstellbar.

Aufgrund des flexiblen Anbindungselementes 3b wird eine Art Trittschutz gebildet. Dies bedeutet, dass eine elastische Nachgiebigkeit zwischen Melkzeug 2 und Tragarmeinrichtung oder Roboterarm bei Stößen, wie sie z.B. durch Tritte eines zu melkenden Tieres vorkommen können, vorhanden ist.

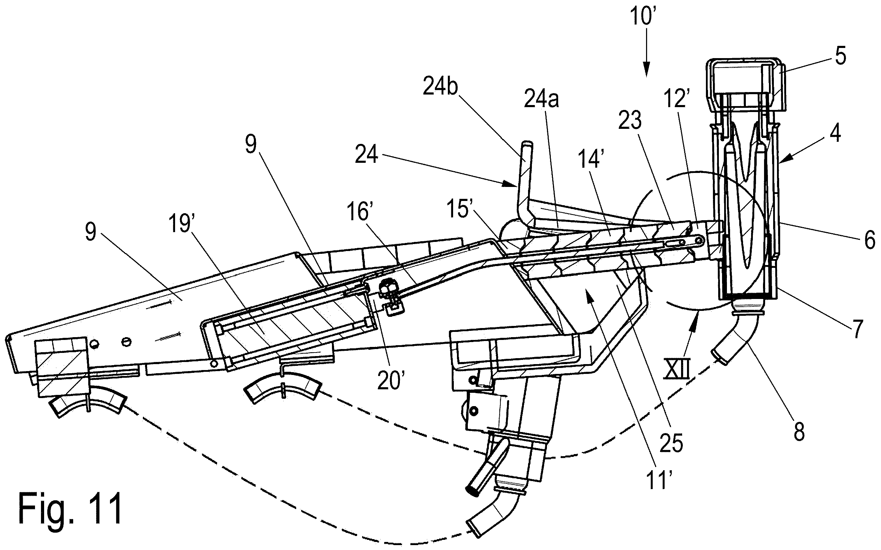

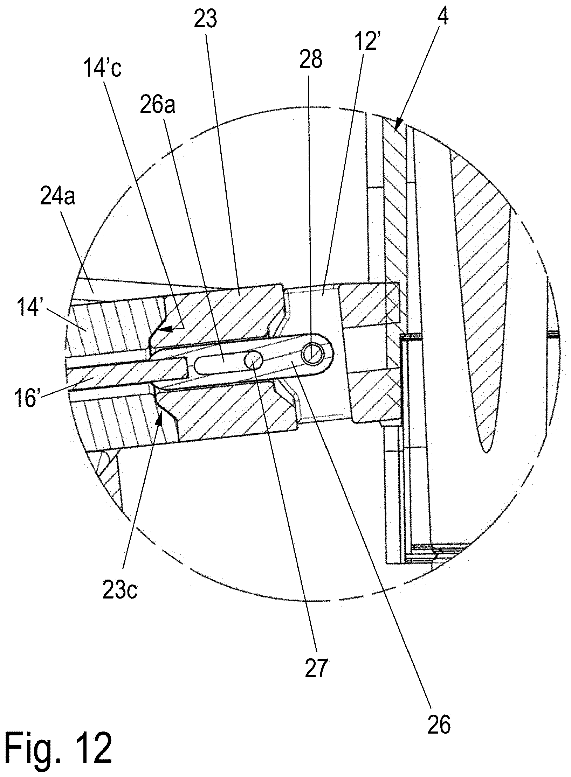

Die Ansetzstellung illustriert Figur 11 in einer schematischen Längsschnittansicht längs Linie XI aus Figur 8b, und Figur 12 zeigt dazu eine vergrößerte Schnittansicht des Bereichs XI aus Figur 11.

Wird nun die Antriebseinrichtung 19' so betätigt, dass die Antriebsstange 20' eingezogen wird, so werden die Zugelemente 16' ebenfalls eingezogen und die Segmenteinheit 11 zusammengezogen. Dabei kommen deren Segmente 15' und 14' und auch das Deckelsegment 23 sowie die Fixiereinrichtung 12' des Zitzenbechers 4 in Kontakt und greifen mit ihren Führungsabschnitten und korrespondierenden Aufnahmen ineinander. Der Zitzenbecher 4 wird dabei aus der Parkstellung hochgezogen und in der Ansetzstellung in einer nahezu senkrechten Position gehalten. Wenn das Deckelsegment 23 auf diese Weise mit den anderen Segmenten in Eingriff steht, ist der Deckel 24, welcher mit dem Deckelsegment 23 fest verbunden ist, von dem Zitzenbecher 4 weggeschwenkt und dessen Kopf 5 mit der Zitzenöffnung frei.

Durch die begrenzte axiale Bewegungsmöglichkeit des Deckelsegmentes 23 gegenüber den Mitnehmern 26 kann mittels der Zugelemente 16' das Deckelsegment 23 mit seinem Führungsabschnitt 23c in die konische Aufnahme 14'c des benachbarten Zwischensegmentes 14' bewegt werden, was Figur 12 verdeutlicht.

Beim Ansetzvorgang der Zitzenbecher 4 an die Zitzen eines Euters eines zu melkende Tieres werden beim Start des senkrechten Hochfahrens des Melkzeugs 2 in Richtung Euter die Zitzenbecher 4, welche nicht angesetzt werden, aus ihrer Ansetzstellung gelöst und damit in die Parkstellung abgelassen. Nur der Zitzenbecher 4, welcher angesetzt werden soll, bleibt fixiert (durch die eingefahrene Antriebseinrichtung 19', 20') und damit in der Ansetzstellung. Dies hat den Vorteil, dass nicht anzusetzende Zitzenbecher 4 nicht in das Euter drücken (stehen mehrere Zitzenbecher 4 in Ansetzstellung, wie in Figur 7 gezeigt ist, und in einer Höhe, ist das unangenehm für das zu melkende Tier, und es steht dadurch unruhiger, was auch dazu führen kann, dass Schmutzreste am Euter (z.B. Stroh) in die nicht anzusetzenden Zitzenbecher 4 gelangt). Damit die gelösten Zitzenbecher 4 in der Parkstellung nicht zu tief hängen und damit den Boden berühren, ist das Tragstück 25 vorgesehen, in/auf dem die gelösten Zwischensegmente 14', 15' liegen.

In der Melkstellung, wenn der jeweilige Zitzenbecher 4 mit der jeweiligen Zitze verbunden sind, sind die Zugelemente 16' durch die Antriebseinrichtungen 19' ebenfalls gelöst. Dadurch wird auch eine seitliche Bewegungsfreiheit zum Anfahren und Ansetzen der anderen Zitzenbecher 4 ermöglicht.

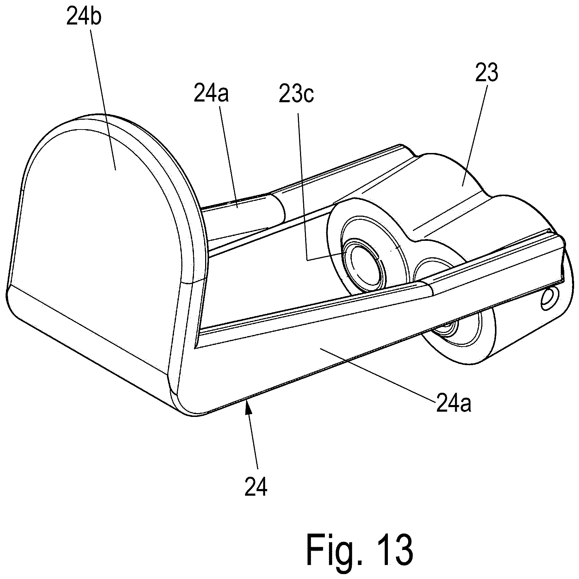

Figur 13 zeigt eine schematische Perspektivansicht des Deckelsegments 23 des zweiten Ausführungsbeispiels nach Figur 7.

Das Deckelsegment 23 besteht wie die Zwischensegmente 14'aus zwei nebeneinander liegenden, seitlich verbundenen zylindrischen Teilen. Es kann natürlich auch andere Formen aufweisen. Durch die Innenbohrungen wird jeweils ein Zugelement 16' geführt, wie aus den Figuren 9 und 11 hervorgeht. Die Innenbohrungen sind auf einer Seite mit umlaufenden Führungsabschnitten 23c und auf der anderen Seite mit korrespondierenden Aufnahmeabschnitten 23d (Figur 10) versehen.

An den Längsseiten des Deckelsegmentes 23 ist jeweils ein Ende eines Deckelarms 24a des Deckels 24 angebracht und fest mit dem Deckelsegment 23 verbunden. Die Deckelarme 24a erstrecken sich parallel zueinander in Längsrichtung des Deckelsegmentes 23 und sind an den anderen Enden leicht nach oben angehoben und mit der Deckelkappe 24b verbunden. Die Deckelkappe 24b weist in der Figur 13 nach oben und ist abgerundet. Ihre Größe entspricht der Größe bzw. dem Durchmesser des von ihr abzudeckenden Kopfes 5 des Zitzenbechers 4.

An der Seite des Deckelsegmentes 23 unterhalb der Befestigung des vorderen Deckelarms 24a ist eine Bohrung gezeigt, durch welche der Anschlagbolzen 27 zur Zusammenwirkung mit den Langlöchern 26a der Mitnehmer 22 bei Montage eingebracht wird.

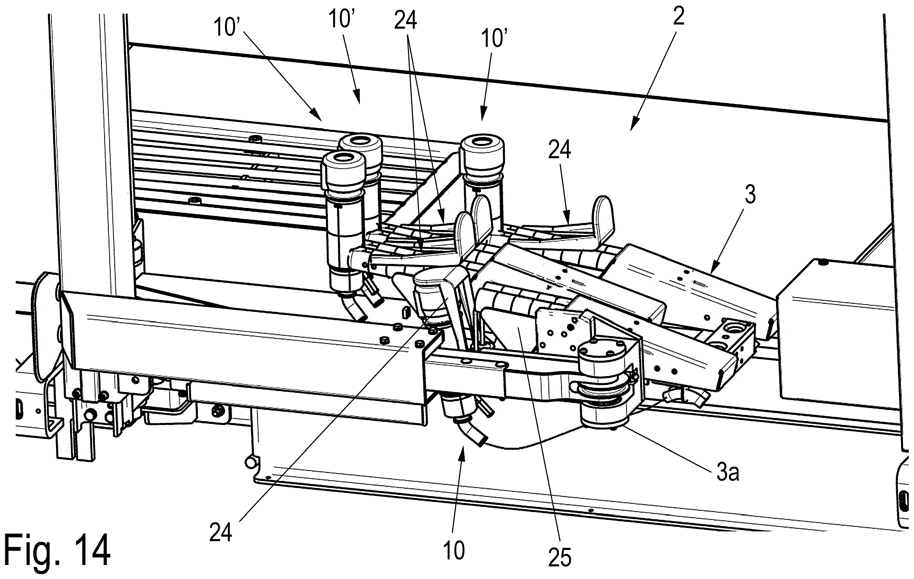

In Figur 14 ist eine schematische Perspektivansicht des zweiten Ausführungsbeispiels des Melkzeugs 2 nach Figur 7 in dem Melkstand 1 nach Figur 1 dargestellt.

Der Träger 3 mit dem Melkzeug 2 ist über den Befestigungsarm 3a mit einer nicht näher bezeichneten Trageinrichtung verschwenkbar verbunden. Die Tragarmeinrichtung kann selbsttätig oder durch einen Roboter betätigt das Melkzeug 2 aus der gezeigten Position neben dem Platz des zu melkenden Tiers unter das Tier bewegen, um die Zitzenbechereinheiten anzusetzen. Die Zitzenbechereinheiten 10' in Ansetzstellung mit abgeklappten Deckeln 24 können in dieser gemeinsamen Ansetzstellung z.B. gemeinsam unter eine nicht gezeigte Reinigungseinheit bewegt werden.

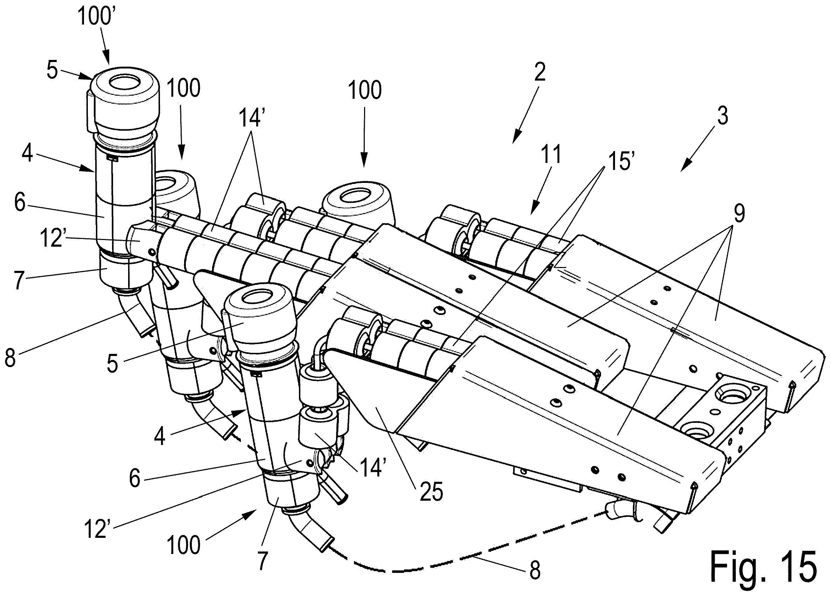

Figur 15 zeigt eine schematische Perspektivansicht eines dritten Ausführungsbeispiels des Melkzeugs 2.

Im Unterschied zum zweiten Ausführungsbeispiel des Melkzeugs 2 weist das dritte Ausführungsbeispiel eine Zugelementanordnung mit einer Segmenteinheit 11' ohne Deckelsegmente 23 und Deckel 24 auf.

Die Fixiereinrichtung 12' steht direkt in Kontakt mit einem Zwischensegment 14'.

Eine Zitzenbechereinheit 100' steht in Ansetzstellung und die anderen drei Zitzenbechereinheiten 100 befinden sich in Parkstellung. Bei gelösten Zugelementen 16' (wie in Figur 7 gezeigt) bewegt sich der Zitzenbecher 4 durch Schwerkraft in die Parkstellung, wobei einige der Zwischensegmente 14' von dem Tragstück 25 getragen bleiben und sich einige durch Schwerkraft auf den Zugelementen 16' nach unten bewegen und auf der Fixiereinrichtung 12' und aufeinander zu liegen kommen.

Die Anlenkung der Zugelemente 16' mit ihren Enden erfolgt in einer einfachen Weise, z.B. über laschenförmige Anbindungen, an dem Zitzenbecher 4 an der Fixiereinrichtung 12', wie in Figuren 11 und 12 beispielhaft dargestellt. Diese Laschen müssen aber nicht als Mitnehmer mit Langlöchern ausgebildet sein. Wichtig ist eine schwenkbare Anbindung solcher Laschen an dem Zitzenbecher 4 bzw. an der Fixiereinrichtung 12', z.B. über einen Schwenkbolzen 28.

Da die Zitzenbechereinheiten 10, 100 in allen Ausführungsbeispielen einzeln betätigbar sind, ist es selbstverständlich möglich, dass die Melkzeuge 2 für milchgebende Tiere auch mit weniger als vier Zitzen, z.B. drei, verwendbar sind. Ebenso ist es vorstellbar, dass eine größere Anzahl durch eine entsprechend Anzahl von Zitzenbechereinheiten 10, 100 möglich ist.

Die Zugelemente 16, 16' und 17 können als flexible Elemente ausgebildet sein. Sie können auch Ketten sein, die mit Kraftspeicherelementen, z.B. Zugfedern, in Reihe geschaltet sind.

### Bezugszeichen

- 1: Melkstand
- 2: Melkzeug
- 3: Träger
- 3a: Befestigungsarm
- 3b: Anbindung
- 3c: Erster Befestigungsabschnitt
- 3d: Zweiter Befestigungsabschnitt
- 4: Zitzenbecher
- 5: Kopf
- 6: Anbindungsabschnitt
- 7: Anschlussabschnitt
- 8: Schlaucheinheit
- 9: Gehäuse
- 10, 10', 10": Zitzenbechereinheit
- 11, 11': Segmenteinheit
- 12, 12': Fixiereinrichtung
- 12a: Fixierabschnitt
- 12b: Kippabschnitt
- 12c: Führungsabschnitt
- 13: Kippsegment
- 13a: Fixieraufnahme
- 13b: Anlageabschnitt
- 13c: Führungsabschnitt
- 13d: Aufnahmeabschnitt
- 14, 14': Zwischensegment
- 14c, 14'c: Führungsabschnitt
- 14d, 14'd: Aufnahmeabschnitt
- 15, 15': Fixiersegment
- 15d: Aufnahmeabschnitt
- 16, 16': Erstes Zugelement
- 17: Zweites Zugelement
- 18: Kipphebel
- 18a: Kippabschnitt
- 18b: Zugabschnitt
- 18c: Kippachse
- 18d, 18e: Anlenkung
- 18f: Druckabschnitt
- 19, 19': Antriebseinrichtung
- 20, 20': Antriebsstange
- 21: Kippantrieb
- 22: Kippstange
- 23: Deckelsegment
- 23c: Führungsabschnitt
- 23d: Aufnahmeabschnitt
- 24: Deckel
- 24a: Deckelarm
- 24b: Deckelkappe
- 25: Tragstück
- 26: Mitnehmer
- 26a: Langloch
- 27: Anschlagbolzen
- 28: Schwenkbolzen
- 100, 100', 100": Zitzenbechereinheit

## Patentansprüche

1. Melkzeug (2) für einen Melkstand (1) zum Melken von milchgebenden Tieren, aufweisend mindestens eine Zitzenbechereinheit (10, 10', 10") mit einem Gehäuse (9), einem Zitzenbecher (4), einer Antriebseinrichtung (19), einer mit dem Zitzenbecher (4) verbundenen Zugelementanordnung, wobei die Zugelementanordnung eine Segmenteinheit (11) mit mindestens zwei Zugelementen (16, 17) aufweist, **dadurch gekennzeichnet, dass** der Zitzenbecher (4) einen Anbindungsabschnitt (6) mit einer Fixiereinrichtung (12) aufweist, welche mit einem korrespondierenden Kippsegment (13) der Segmenteinheit (11) zusammenwirkt, und dass die Segmenteinheit (11) mehrere Zwischensegmente (14) aufweist, welche zwischen einem an dem Gehäuse (9) angebrachten Fixiersegment (15) und dem Kippsegment (13) angeordnet sind, wobei die mindestens zwei Zugelemente (16, 17) innerhalb der Segmenteinheit (11) übereinander angeordnet sind.

2. Melkzeug (2) nach Anspruch 1, **dadurch gekennzeichnet, dass** die mindestens eine Zitzenbechereinheit (10, 10', 10") aus einer Parkstellung, in welcher der Zitzenbecher (4) eine zur Senkrechten geneigte Position einnimmt, in eine Ansetzstellung, in welcher der Zitzenbecher (4) in einer nahezu senkrechten Position steht, in eine Melkstellung, in welcher der Zitzenbecher (4) mit einer zugeordneten Zitze des zu melkenden Tieres verbunden ist, und wieder zurück bewegbar ist.

3. Melkzeug (2) nach Anspruch 1 oder 2, **dadurch gekennzeichnet, dass** die Segmenteinheit (11) die Fixiereinrichtung (12), das Kippsegment (13), die mehreren Zwischensegmente (14) und das Fixiersegment (15) aufweist, wobei die Fixiereinrichtung (12) mit dem Zitzenbecher (4) fest verbunden ist und das Fixiersegment (15) mit dem Gehäuse (9) fest verbunden ist.

4. Melkzeug (2) nach Anspruch 3, **dadurch gekennzeichnet, dass** die Fixiereinrichtung (12) einen schrägen Kippabschnitt (12b) aufweist, und das Kippsegment (13) einen mit dem schrägen Kippabschnitt (12b) korrespondierenden schrägen Anlageabschnitt (13b) aufweist.

5. Melkzeug (2) nach einem der Ansprüche 1 bis 4, **dadurch gekennzeichnet, dass** die mindestens zwei Zugelemente (16, 17) der Zugelementanordnung mit einem Kipphebel (18) verbunden sind, welcher mit der Antriebseinrichtung (19) und einem Kippantrieb (21) in Wirkverbindung steht.

6. Melkzeug (2) nach Anspruch 5, **dadurch gekennzeichnet, dass** der Kipphebel (18) durch die Antriebseinrichtung (19) in eine erste Position bewegbar ist, in welcher die mindestens zwei Zugelemente (16, 17) gespannt sind, wobei die Segmenteinheit (11) zusammengezogen in Eingriff steht und der mindestens eine Zitzenbecher (4) in einer Ansetzstellung steht, und dass der Kipphebel (18) durch die Antriebseinrichtung (19) in eine zweite Position bewegbar ist, in welcher die mindestens zwei Zugelemente (16, 17) entspannt sind, wobei der mindestens eine Zitzenbecher (4) eine Melkstellung einnimmt.

7. Melkzeug (2) nach Anspruch 6, **dadurch gekennzeichnet, dass** der Kipphebel (18) in seiner ersten Position durch den Kippantrieb (21) um eine Kippachse (18c) in eine Schwenkposition verschwenkbar ist, in welcher ein Zugelement (17) der mindestens zwei Zugelemente (16, 17) verkürzt und das andere verlängert wird, wobei der schräge Kippabschnitt (12b) der Fixiereinrichtung (12) und der schräge Anlageabschnitt (13b) des Kippsegments (13) in Eingriff sind und der mindestens eine Zitzenbecher (4) in eine zur Senkrechten geneigte Parkstellung verschwenkt ist.

8. Melkzeug (2) für einen Melkstand (1) zum Melken von milchgebenden Tieren, aufweisend mindestens eine Zitzenbechereinheit (10, 10', 10") mit einem Gehäuse (9), einem Zitzenbecher (4), einer Antriebseinrichtung (19), einer mit dem Zitzenbecher (4) verbundenen Zugelementanordnung, wobei die Zugelementanordnung eine Segmenteinheit (11') mit mindestens zwei Zugelementen (16) aufweist, **dadurch gekennzeichnet, dass** der Zitzenbecher (4) einen Anbindungsabschnitt (6) mit einer Fixiereinrichtung (12') aufweist, welche mit einem korrespondierenden Deckelsegment (23) der Segmenteinheit (11') zusammenwirkt, und dass die Segmenteinheit (11') mehrere Zwischensegmente (14') aufweist, welche zwischen einem an dem Gehäuse (9) angebrachten Fixiersegment (15') und dem Deckelsegment (23) angeordnet sind, wobei die mindestens zwei Zugelemente (16') innerhalb der Segmenteinheit (11') nebeneinander angeordnet sind.

9. Melkzeug (2) nach Anspruch 8, **dadurch gekennzeichnet, dass** die mindestens eine Zitzenbechereinheit (10, 10', 10") aus einer Parkstellung in eine Ansetzstellung, in welchen der Zitzenbecher (4) in nahezu senkrechter Position steht, in eine Melkstellung, in welcher der Zitzenbecher (4) mit einer zugeordneten Zitze des zu melkenden Tieres verbunden ist, und wieder zurück bewegbar ist.

10. Melkzeug (2) nach Anspruch 9, **dadurch gekennzeichnet, dass** die Segmenteinheit (11') die Fixiereinrichtung (12'), das Deckelsegment (23), die mehreren Zwischensegmente (14') und das Fixiersegment (15') aufweist, wobei die Fixiereinrichtung (12') mit dem Zitzenbecher (4) fest verbunden ist und das Fixiersegment (15') mit dem Gehäuse (9) fest verbunden ist.

11. Melkzeug (2) nach Anspruch 10, **dadurch gekennzeichnet, dass** das Deckelsegment (23) mit einem Deckel (24) fest verbunden ist.

12. Melkzeug (2) nach einem der Ansprüche 9 bis 11, **dadurch gekennzeichnet, dass** ein Kopf (5) mit einer Zitzenöffnung des mindestens einen Zitzenbechers (4) in einer Parkstellung von einer Deckelkappe (24b) des Deckels (24) des Deckelsegmentes (23) bedeckt ist.

13. Melkzeug (2) nach Anspruch 12, **dadurch gekennzeichnet, dass** das Deckelsegment (23) mit dem Zitzenbecher (4) über mindestens einen Mitnehmer (26) mit einer axialen Beweglichkeit verbunden ist.

14. Melkzeug (2) nach Anspruch 9, **dadurch gekennzeichnet, dass** die Segmenteinheit (11') die Fixiereinrichtung (12'), die mehreren Zwischensegmente (14') und das Fixiersegment (15') aufweist, wobei die Fixiereinrichtung (12') mit dem Zitzenbecher (4) fest verbunden ist und das Fixiersegment (15') mit dem Gehäuse (9) fest verbunden ist.

15. Melkzeug (2) nach einem der Ansprüche 9 bis 14, **dadurch gekennzeichnet, dass** unterhalb des Fixiersegmentes (15') am Gehäuse (9) ein Tragstück (25) angeordnet ist, auf welchem mindestens eins der Zwischensegmente (14') aufliegt.

16. Melkzeug (2) nach Anspruch 8 bis 15, **dadurch gekennzeichnet, dass** die mindestens zwei Zugelemente (16') der Zugelementanordnung mit einer Antriebseinrichtung (19') in Wirkverbindung stehen.

17. Melkzeug (2) nach Anspruch 16, **dadurch gekennzeichnet, dass** die mindestens zwei Zugelemente (16, 16') durch die Antriebseinrichtung (19') in eine erste Position bewegbar sind, in welcher sie gespannt sind, wobei die Segmenteinheit (11') zusammengezogen in Eingriff steht und der mindestens eine Zitzenbecher (4) in einer Ansetzstellung steht, und dass die mindestens zwei Zugelemente (16') durch die Antriebseinrichtung (19) in eine zweite Position bewegbar sind, in welcher sie entspannt sind, wobei der mindestens eine Zitzenbecher (4) durch seine Schwerkraft in eine Parkstellung bewegt ist oder eine Melkstellung einnimmt.

18. Melkstand (1) zum Melken von milchgebenden Tieren, mit einem Melkzeug (2) nach einem der vorhergehenden Ansprüche.

19. Melkstand (1) nach Anspruch 18, **dadurch gekennzeichnet, dass** das Melkzeug (2) an einer Tragarmeinrichtung angebracht ist.

20. Melkstand (1) nach Anspruch 19, **dadurch gekennzeichnet, dass** das Melkzeug (2) an der Tragarmeinrichtung flexibel angebracht ist.

21. Melkstand (1) nach Anspruch 18, **dadurch gekennzeichnet, dass** das Melkzeug (2) an einem Roboterarm angebracht ist.

22. Melkstand (1) nach Anspruch 21, **dadurch gekennzeichnet, dass** das Melkzeug (2) an dem Roboterarm flexibel angebracht ist.

23. Verfahren zum Ansetzen eines Melkzeugs (2) nach einem der Ansprüche 1 bis 17, **dadurch gekennzeichnet, dass** bei einem Ansetzvorgang der Zitzenbecher (4) an die Zitzen eines Euters eines zu melkende Tieres beim Start eines senkrechten Hochfahrens des Melkzeugs (2) in Richtung Euter die Zitzenbecher (4), welche nicht angesetzt werden, aus ihrer Ansetzstellung gelöst und in die Parkstellung gebracht werden.

## Claims

1. A milking cluster (2) for a milking parlor (1) for milking milk-producing animals, said milking cluster having at least one teat cup unit (10, 10', 10") with a housing (9), a teat cup (4), a drive device (19) and a pulling element arrangement which is connected to the teat cup (4), wherein the pulling element arrangement has a segment unit (11) with at least two pulling elements (16, 16', 17), **characterized in that** the teat cup (4) has a connection portion (6) with a fixing device (12) which cooperates with a corresponding tilt segment (13) of the segment unit (11), and that the segment unit (11) has several intermediate segments (14) which are arranged between a fixing segment (15) which is attached on the housing (9) and the tilt segment 13, wherein the at least two pulling elements (16, 16') of the pulling element arrangement are arranged one above the other.

2. The milking cluster (2) as claimed in claim 1, **characterized in that** the at least one teat cup unit (10, 10', 10") is movable out of a park position in which the teat cup (4) assumes a position that is inclined with respect to the perpendicular, into a positioning position in which the teat cup (4) is in a substantially perpendicular position, into a milking position in which the teat cup (4) is connected to an associated teat of the animal to be milked, and back again.

3. The milking cluster (2) as claimed in claim 1 or 2, **characterized in that** the segment unit (11) comprises the fixing device (12), the tilt segment (13), the several intermediate segments (14) and the fixing segment (15), wherein the fixing device (12) is fixedly connected to the teat cup (4) and the fixing segment (15) is fixedly connected to the housing (9).

4. The milking cluster (2) as claimed in claim 3, **characterized in that** the fixing device (12) has an inclined tilt portion (12b), and the tilt segment (13) has an inclined contact portion (13b) which corresponds to the inclined tilt portion (12b).

5. The milking cluster (2) as claimed in one of claims 1 to 4, **characterized in that** the at least two pulling elements (16, 17) of the pulling element arrangement are connected to a tilt lever (18) which is operatively connected to a drive device (19) and a tilt drive (21).

6. The milking cluster (2) as claimed in claim 5, **characterized in that** the tilt lever (18) is movable by means of the drive device (19) into a first position in which the at least two pulling elements (16, 17) are tensioned, wherein the segment unit (11), contracted, is engaged and the at least one teat cup (4) is in a positioning position, and **in that** the tilt lever (18) is movable by means of the drive device (19) into a second position in which the at least two pulling elements (16, 17) are slackened, wherein the at least one teat cup (4) assumes a milking position.

7. The milking cluster (2) as claimed in claim 6, **characterized in that** in its first position the tilt lever (18) is pivotable by means of the tilt drive (21) about a tilt axis (18c) into a pivot position in which a pulling element (17) of the at least two pulling elements (16, 17) is shortened and the other is lengthened, wherein the inclined tilt portion (12b) of the fixing device (12) and the inclined contact portion (13b) of the tilt segment (13) are engaged and the at least one teat cup (4) is pivoted into a park position which is inclined with respect to the perpendicular.

8. A milking cluster (2) for a milking parlor (1) for milking milk-producing animals, said milking cluster having at least one teat cup unit (10, 10', 10") with a housing (9), a teat cup (4), a drive device (19) and a pulling element arrangement which is connected to the teat cup (4), wherein the pulling element arrangement has a segment unit (11') with at least two pulling elements (16, 16', 17), **characterized in that** the teat cup (4) has a connection portion (6) with a fixing device (12') which cooperates with a cover segment (23) of the segment unit (11'), and that the segment unit (11') has several intermediate segments (14') which are arranged between a fixing segment (15') which is attached on the housing (9) and the cover segment (23), wherein the at least two pulling elements (16') are arranged side by side within the segment unit (11').

9. The milking cluster (2) as claimed in claim 8, **characterized in that** the at least one teat cup unit (10, 10', 10") the at least one teat cup unit (10, 10', 10") is movable out of a park position into a positioning position in which the teat cup (4) is in an almost perpendicular position, into a milking position in which the teat cup (4) is connected to an associated teat of the animal to be milked, and back again.

10. The milking cluster (2) as claimed in claim 9, **characterized in that** the segment unit (11') comprises the fixing device (12'), the cover segment (23), the several intermediate segments (14') and the fixing segment (15'), wherein the fixing device (12') is fixedly connected to the teat cup (4) and the fixing segment (15') is fixedly connected to the housing (9).

11. The milking cluster (2) as claimed in claim 10, **characterized in that** the cover segment (23) is fixedly connected to a cover (24).

12. The milking cluster (2) as claimed in one of claims 9 to 11, **characterized in that** in a park position a head (5) with a teat opening of the at least one teat cup (4) is covered by a cover cap (24b) of the cover (24) of the cover segment (23).

13. The milking cluster (2) as claimed in claim 12, **characterized in that** the cover segment (23) is connected to the teat cup (4) with axial mobility by means of at least one entrainment means (26).

14. The milking cluster (2) as claimed in claim 9, **characterized in that** the segment unit (11') comprises the fixing device (12'), the several intermediate segments (14) and the fixing segment (15'), wherein the fixing device (12') is fixedly connected to the teat cup (4) and the fixing segment (15') is fixedly connected to the housing (9).

15. The milking cluster (2) as claimed in one of claims 9 to 14, **characterized in that** a carrier piece (25), on which at least one of the intermediate segments (14') rests, is arranged below the fixing segment (15') on the housing (9).

16. The milking cluster (2) as claimed in claims 8 to 15, **characterized in that** the at least two pulling elements (16') of the pulling element arrangement are operatively connected to a drive device (19').

17. The milking cluster (2) as claimed in claim 16, **characterized in that** the at least two pulling elements (16, 16') are movable by means of the drive device (19) into a first position in which they are tensioned, wherein the segment unit (11), contracted, is engaged and the at least one teat cup (4) is in a positioning position, and **in that** the at least two pulling elements (16, 16') are movable by means of the drive device (19) into a second position in which they are slackened, wherein the at least one teat cup (4) is moved by means of its gravitational force into a park position or assumes a milking position.

18. A milking parlor (1) for milking milk-producing animals, said milking parlor having a milking cluster (2) as claimed in one of the preceding claims.

19. The milking parlor (1) as claimed in claim 18, **characterized in that** the milking cluster (2) is attached on a support arm device.

20. The milking parlor (1) as claimed in claim 19, **characterized in that** the milking cluster (2) is attached in a flexible manner on the support arm device.

21. The milking parlor (1) as claimed in claim 18, **characterized in that** the milking cluster (2) is attached on a robot arm.

22. The milking parlor (1) as claimed in claim 21, **characterized in that** the milking cluster (2) is attached in a flexible manner on the robot arm.

23. A method for positioning a milking cluster (2) as claimed in one of claims 1 to 17, **characterized in that** during an operation positioning the teat cups (4) onto the teats of an udder of an animal to be milked, at the start of moving the milking cluster (2) upward perpendicularly in the direction of the udder, the teat cups (4) which are not positioned are taken out of their positioning position and moved into the park position.

## Revendications

1. Faisceau trayeur (2) pour un poste de traite (1) destiné à la traite d'animaux producteurs de lait, présentant au moins une unité de gobelet trayeur (10, 10', 10") comportant un boîtier (9), un gobelet trayeur (4), un moyen d'entraînement (19), un agencement d'éléments de traction relié au gobelet trayeur (4), l'agencement d'éléments de traction présentant une unité de segments (11) avec au moins deux éléments de traction (16, 17), **caractérisé en ce que** le gobelet trayeur (4) présente une partie de liaison (6) avec un moyen de fixation (12) qui coopère avec un segment basculant correspondant (13) de l'unité de segments (11), et que l'unité de segments (11) présente plusieurs segments intermédiaires (14) qui sont disposés entre un segment de fixation (15) qui est fixé au boîtier (9) et le segment basculant (13), lesdits au moins deux éléments de traction (16, 17) étant disposés l'un au-dessus de l'autre à l'intérieur de l'unité de segments (11).

2. Faisceau trayeur (2) selon la revendication 1, **caractérisé en ce que** ladite au moins une unité de gobelet trayeur (10, 10', 10") peut être déplacée d'une position de repos, dans laquelle le gobelet trayeur (4) prend une position inclinée par rapport à la verticale, dans une position de placement, dans laquelle le gobelet trayeur (4) est dans une position presque verticale, dans une position de traite dans laquelle le gobelet trayeur (4) est relié à un trayon associé de l'animal à traire, et inversement.

3. Faisceau trayeur (2) selon la revendication 1 ou 2, **caractérisé en ce que** l'unité de segments (11) présente le moyen de fixation (12), le segment basculant (13), lesdits plusieurs segments intermédiaires (14) et le segment de fixation (15), le moyen de fixation (12) étant relié de manière fixe au gobelet trayeur (4) et le segment de fixation (15) relié de manière fixe au boîtier (9).

4. Faisceau trayeur (2) selon la revendication 3, **caractérisé en ce que** le moyen de fixation (12) présente une partie basculante oblique (12b) et le segment basculant (13) présente une partie d'appui oblique (13b) correspondant à la partie basculante oblique (12b).

5. Faisceau trayeur (2) selon l'une des revendications 1 à 4, **caractérisé en ce que** lesdits au moins deux éléments de traction (16, 17) de l'agencement d'éléments de traction sont reliés à un levier basculant (18) qui est en liaison fonctionnelle avec le moyen d'entraînement (19) et un entraînement basculant (21).

6. Faisceau trayeur (2) selon la revendication 5, **caractérisé en ce que** le levier basculant (18) peut être déplacé par le moyen d'entraînement (19) dans une première position dans laquelle lesdits au moins deux éléments de traction (16, 17) sont tendus, l'unité de segments (11) étant en prise de façon contractée et ledit au moins un gobelet trayeur (4) étant dans une position de placement, et que le levier basculant (18) peut être déplacé par le moyen d'entraînement (19) dans une deuxième position dans laquelle lesdits au moins deux éléments de traction (16, 17) sont détendus, ledit au moins un gobelet trayeur (4) prenant une position de traite.

7. Faisceau trayeur (2) selon la revendication 6, **caractérisé en ce que** le levier basculant (18) dans sa première position peut être pivoté par l'entraînement basculant (21) autour d'un axe de basculement (18c) dans une position de pivotement dans laquelle un élément de traction (17) desdits au moins deux éléments de traction (16, 17) est raccourci et l'autre rallongé, la partie basculante oblique (12b) du moyen de fixation (12) et la partie d'appui oblique (13b) du segment basculant (13) étant en prise et ledit au moins un gobelet trayeur (4) étant pivoté dans une position de repos inclinée par rapport la verticale.

8. Faisceau trayeur (2) pour un poste de traite (1) destiné à la traite d'animaux producteurs de lait, présentant au moins une unité de gobelet trayeur (10, 10', 10") comportant un boîtier (9), un gobelet trayeur (4), un moyen d'entraînement (19), un agencement d'éléments de traction relié au gobelet trayeur (4), l'agencement d'éléments de traction présentant une unité de segments (11') avec au moins deux éléments de traction (16), **caractérisé en ce que** le gobelet trayeur (4) présente une partie de liaison (6) avec un moyen de fixation (12') qui coopère avec un segment de couvercle correspondant (23) de l'unité de segments (11'), et que l'unité de segments (11') présente plusieurs segments intermédiaires (14') qui sont disposés entre un segment de fixation (15') fixé au boîtier (9) et le segment de couvercle (23), lesdits au moins deux éléments de traction (16') étant disposés l'un à côté de l'autre à l'intérieur de l'unité de segments (11').

9. Faisceau trayeur (2) selon la revendication 8, **caractérisé en ce que** ladite au moins une unité de gobelet trayeur (10, 10', 10") peut être déplacée d'une position de repos dans une position de placement dans laquelle le gobelet trayeur (4) est dans une position presque verticale, dans une position de traite dans laquelle le gobelet trayeur (4) est relié à un trayon associé de l'animal à traire, et inversement.

10. Faisceau trayeur (2) selon la revendication 9, **caractérisé en ce que** l'unité de segments (11') présente le moyen de fixation (12'), le segment de couvercle (23), lesdits plusieurs segments intermédiaires (14') et le segment de fixation (15'), le moyen de fixation (12') étant relié de manière fixe au gobelet trayeur (4) et le segment de fixation (15') relié de manière fixe au boîtier (9).

11. Faisceau trayeur (2) selon la revendication 10, **caractérisé en ce que** le segment de couvercle (23) est relié de manière fixe à un couvercle (24).

12. Faisceau trayeur (2) selon l'une des revendications 9 à 11, **caractérisé en ce qu'**une tête (5) avec une ouverture de trayon dudit au moins un gobelet trayeur (4) est recouverte dans une position de repos par un abattant de couvercle (24b) du couvercle (24) du segment de couvercle (23).

13. Faisceau trayeur (2) selon la revendication 12, **caractérisé en ce que** le segment de couvercle (23) est relié au gobelet trayeur (4) par au moins un élément d'entraînement (26) à mobilité axiale.

14. Faisceau trayeur (2) selon la revendication 9, **caractérisé en ce que** l'unité de segments (11') présente le moyen de fixation (12'), lesdits plusieurs segments intermédiaires (14') et le segment de fixation (15'), le moyen de fixation (12') étant relié de manière fixe au gobelet trayeur (4) et le segment de fixation (15') relié de manière fixe au boîtier (9).

15. Faisceau trayeur (2) selon l'une des revendications 9 à 14, **caractérisé en ce qu'**une pièce de support (25), sur laquelle repose au moins un des segments intermédiaires (14'), est disposée sous le segment de fixation (15') sur le boîtier (9).

16. Faisceau trayeur (2) selon les revendications 8 à 15, **caractérisé en ce que** lesdits au moins deux éléments de traction (16') de l'agencement d'éléments de traction sont en liaison fonctionnelle avec un moyen d'entraînement (19').

17. Faisceau trayeur (2) selon la revendication 16, **caractérisé en ce que** lesdits au moins deux éléments de traction (16, 16') peuvent être déplacés par le moyen d'entraînement (19') dans une première position dans laquelle ils sont tendus, l'unité de segments (11') étant en prise de façon contractée et ledit au moins un gobelet trayeur (4) étant dans une position de placement, et que lesdits au moins deux éléments de traction (16') peuvent être déplacés par le moyen d'entraînement (19) dans une deuxième position dans laquelle ils sont détendus, ledit au moins un gobelet trayeur (4) étant déplacé par sa pesanteur dans une position de repos ou prenant une position de traite.

18. Poste de traite (1) pour la traite d'animaux producteurs de lait, comportant un faisceau trayeur (2) selon l'une des revendications précédentes.

19. Poste de traite (1) selon la revendication 18, **caractérisé en ce que** le faisceau trayeur (2) est fixé à un moyen à bras de support.

20. Poste de traite (1) selon la revendication 19, **caractérisé en ce que** le faisceau trayeur (2) est fixé de manière flexible au moyen à bras de support.

21. Poste de traite (1) selon la revendication 18, **caractérisé en ce que** le faisceau trayeur (2) est fixé à un bras de robot.

22. Poste de traite (1) selon la revendication 21, **caractérisé en ce que** le faisceau trayeur (2) est fixé de manière flexible au bras de robot.

23. Procédé de placement d'un faisceau trayeur (2) selon l'une des revendications 1 à 17, **caractérisé en ce que** lors d'une opération de placement des gobelets trayeurs (4) sur les trayons d'un pis d'un animal à traire, au début d'une montée verticale du faisceau trayeur (2) en direction du pis, les gobelets trayeurs (4) qui ne sont pas placés sont libérés de leur position de placement et amenés dans la position de repos.
